# EUROPÄISCHE PATENTSCHRIFT

(11) **EP 0 603 648 B1**
(45) Veröffentlichungstag und Bekanntmachung des Hinweises auf die Patenterteilung: **23.04.1997**
(21) Anmeldenummer: 93119765.1
(22) Anmeldetag: 08.12.1993
(51) Int. Cl.: D06P 1/50

(54) **Verwendung von Sulfoethylcellulose als Verdickungsmittel für Textildruckfarbpasten**
Use of sulfoethylcellulose ether as thickening agent in printing pastes for textiles
Utilisation de sulphoéthylcellulose comme épaississant dans des pâtes d'impression pour matériaux textiles

(30) Priorität: 21.12.1992 DE 4243281
(43) Veröffentlichungstag der Anmeldung: 29.06.1994
(73) Patentinhaber: WOLFF WALSRODE AKTIENGESELLSCHAFT, D-29699 Walsrode (DE)
(72) Erfinder: Kiesewetter, René, Dr., D-29614 Soltau-Ahlften (DE); Kniewske, Reinhard, Dr., D-29683 Fallingbostel (DE); Reinhardt, Eugen, D-29664 Walsrode (DE); Szablikowski, Klaus, Dr., D-29664 Walsrode (DE)
(74) Vertreter: Braun, Rolf, Dr.

(56) Entgegenhaltungen:
- EP-A- 0 319 867
- DE-C- 693 030
- US-A- 4 519 923

## Beschreibung

Die vorliegende Erfindung betrifft die Verwendung von Sulfoethylcellulose mit einem Substitutionsgrad von Sulfoalkylgruppen zwischen 1,2 und 2,0 als Verdickungsmittel im Reaktiv-Textildruck.

Unter einer Druckfarbe (Druckpaste) wird eine fertige, zum Drucken geeignete Kombination eines Farbstoffes mit zum Druck notwendigen weiteren Komponenten verstanden. An solchen Komponenten ist in erster Linie das Verdickungsmittel zu nennen, das der Druckfarbe eine für den Druck geeignete Viskosität verleihen soll, da dünnflüssige, wäßrige Farbstofflösungen zum Auslaufen neigen und die Konturen des Musters daher nicht scharf eingehalten werden können. Ferner übernimmt das Verdickungsmittel in der Druckpaste Schutzkolloid- und Schutzfilmfunktionen, reguliert den Feuchtigkeitshaushalt der Druckpaste und beeinflußt damit nachhaltig die Farbausbeute (B. Habereder, F.Baierlein in: Handbuch der Textilhilfsmittel; Herausgeber: A. Chwala, V. Anger, Verlag Chemie, Weinheim 1977, S. 621).

Verdickungen müssen mit den entsprechenden Farbstoffen verträglich sein und dürfen nicht mit ihnen reagieren. Reaktivfarbstoffe besitzen z.B. solche reaktionsfähigen Gruppen, die unter den Färbebedingungen mit dem Substrat in Gegenwart von Alkalien reagieren und den Farbstoff über eine kovalente Bindung fixieren (H. Zollinger, Angew. Chem., 73, 125 [1961]). Verdickungsmittel, die einen ähnlichen Aufbau wie das zu färbende Substrat besitzen, sind daher normalerweise ungeeignet.

Um fehlerhafte Drucke, die durch Verstopfungen der Schablonen oder Gaze entstehen könnten, zu vermeiden, müssen die Verdickungen vollkommen faser-und gelkörperfrei sein.

Von der Vielzahl der im Textildruck eingesetzten Verdickungsmittel stellen Alginate und Natrium-Carboxymethylcellulosen den weitaus größten Teil dar. Die im allgemeinen, in Konzentrationen von 3 bis 4 % eingesetzten Alkalisalze der Alginsäuren besitzen den Vorteil, daß sie gut auswaschbar sind. Alginate sind mit einer Reihe von Farbstoffen verträglich und im Bereich von pH 5 bis 10 weitgehend stabil. Bei höheren pH-Werten werden transeliminative Depolymerisationen beobachtet (A. Hang et al., Acta Chem. Scand., 21, 2859 [1967]). Bekanntlich sind Alkalialginate unverträglich mit Schwermetallsalzen, Calcium- und Aluminiumverbindungen, was wiederum den Einsatz von Komplexbildnern erforderlich macht. Als Biopolymer wird Alginat leicht durch Mikroorganismen abgebaut. Ungeschützte Verdickungen halten sich in der Regel nur ein bis zwei Tage, so daß den Verdickungen Konservierungsmittel, wie z.B. Formaldehydlösungen bzw. Phenole hinzugesetzt werden müssen.

Für einen Einsatz von Verdickungen im Textildruck in wärmeren Regionen ist eine sehr gute Temperaturstabilität der Verdickungsmittel erforderlich. Bei der Verwendung von Alginaten kann es hierbei zu quantitativen Decarboxylierungen kommen.

Die im Reaktivdruck z.Z. als Verdickungsmittel und Rheologieverbesserer eingesetzten Natrium-Carboxymethylcellulosen, weisen Substitutionsgrade von 2 oder höher auf. Der Grund, warum Carboxymethylcellulose (CMC) mit einem DS <2 nicht eingesetzt werden kann, liegt in einer nach dem Drucken auftretenden Griffverhärtung des Textilgewebes aufgrund von Reaktionen der CMC mit dem Farbstoff über unveretherte OH-Gruppen.

Die Ursache, daß eine CMC mit einem Substitutionsgrad <2 noch mit dem Reaktivfarbstoff reagieren kann, ist in der Struktur der CMC und den Substitutionsorten der Carboxymethylgruppen innerhalb einer Anhydroglukoseeinheit begründet. Im Vergleich zu Carboxymethylcellulose reagiert Alginat, dessen C₆-Position eine Carboxyfunktion darstellt und damit einen "Substitutionsgrad" durch Carboxylfunktionen von 1 besitzt, im allgemeinen nicht mit Reaktivfarbstoffen.

Entsprechend dem Stand der Technik sind also die Nachteile einer Griffverhärtung beim Reaktivdruck durch den Einsatz von CMC als Verdickungsmittel erst oberhalb eines Substitutionsgrades von ca. 2,2 überwunden (vergleiche DE-PS 3 208 430).

Die Herstellung einer CMC mit DS ≥2,2 ist jedoch äußerst kostenintensiv und führt mit zunehmender Substitutionshöhe zu immer schlechteren Reagenzausbeuten (siehe z.B. M.U. Mahmud, Acta Polym., 38 (1987) (3), 172; R.R. McLaughlin, J.H.E. Herbst, Can. J. Res., 28 B (1950) 731; K. Engelskirchen, in Houben-Weyl's "Makromolekulare Stoffe", Band E 20/III, Georg Thieme Verlag, Stuttgart, 1987, S. 2072 ff).

Als weitere, im Textildruck verwendete Verdickungsmittel sind darüber hinaus Xanthane, Emulsionsverdickungen und synthetische Polymerisat-Verdickungsmittel von Bedeutung, die jedoch alle eine Reihe von Nachteilen aufweisen, so daß die gewünschten Effekte nicht mit einem einzigen Verdickungsmittel allein erreicht werden können. So ist z.B. der Druck mit Emulsionsverdickungen aus Preis- und Ökologiegründen stark rückläufig. Xanthane weisen neben ihren hohen Kosten ungenügende Stabilitäten gegenüber mikrobiellem Abbau auf. Polymerisatverdicker sind extrem elektrolytempfindlich, was sie besonders anfällig gegenüber hartem Wasser, anionischen Farbstoffen und Stellmittelsalzen macht.

Die technische Aufgabe bestand nun darin, ein Cellulosederivat zur Verfügung zu stellen, das bei bereits deutlich niedrigeren Substitutionsgraden als 2,2 keine Reaktion mit dem Reaktivfarbstoff ergibt und somit zu keiner Griffverhärtung des Substrates (Textilgewebes) führt. Das Produkt sollte stabil gegenüber mikrobiellem Abbau sein und keine Empfindlichkeit gegenüber Elektrolyten, speziell besonders kritischen zweiwertigen Kationen (wie z.B. Ca²⁺) zeigen. Die Eigenschaften beim Drucken sollten vergleichbar mit Alginaten sein.

Überraschenderweise wurde gefunden, daß Sulfoethylcellulosederivate, mit Substitutionsgraden zwischen 1,2 und 2,0, insbesondere zwischen 1,4 und 1,8, die Nachteile des Standes der Technik überwinden, wenn das Sulfoethylcellulosederivat folgendermaßen hergestellt wird:
1. Herstellung einer Sulfoethylcellulose (SEC) nach einem Slurry-Verfahren zu einem Substitutionsgrad von ca. 0,5 bis ca. 1.0.
2. Weiterveretherung der Sulfoethylcellulose, nach gegebenenfalls Reinigung, Trocknung und Mahlung, in einem weiteren Veretherungsschritt (z.B. Semi-dry- oder Slurry-Prozeß) zu einer Sulfoethylcellulose mit einem Substitutionsgrad von 1,2 bis 2,0, insbesondere 1,4 bis 1,8, wobei das bei der Reaktion nicht verbrauchte Alkali anschließend mit wäßrig-organischen Lösungsmitteln ausgewaschen, mit alkaliverbrauchenden Reagenzien, wie z.B. Alkylhalogeniden (z.B. Methylchlorid), umgesetzt, bevorzugt jedoch mit einer Säure neutralisiert wird.
3. Trocknung und Mahlung der so erhaltenen Sulfoethylcellulose nach vollständiger oder teilweiser Abtrennung der Salze bzw. Reaktionsnebenprodukte, wobei auf eine Reinigungsoperation nach der Veretherung vorzugsweise verzichtet wird. Anschließend Konfektionierung in üblicher und bekannter Weise.

Um eine hohe Viskositätsergiebigkeit gewährleisten zu können, kann es zweckmäßig sein, die nach der ersten Stufe im Produkt verbliebenen Mengen an Salzen und Reaktionsnebenprodukten durch Reinigung mit wäßrig-organischen Lösungsmitteln teilweise oder vollständig auszuwaschen.

Um die Zugänglichkeit der Cellulose bzw. der nach der ersten Stufe erhaltenen Sulfoethylcellulose zu erhöhen und damit die Reagenzausbeute zu verbessern, kann die vorzugsweise vor der Reaktion mit sulfoalkylgruppenübertragenden Reagenzien erfolgte Umsetzung mit geringen Mengen an aktivierenden Agenzien wie z.B. Methylchlorid, Chloressigsäure und/oder Epoxiden, speziell Ethylenoxid und/oder Propylenoxid vorgenommen werden, ohne daß sich dabei der Charakter des Celluloseethers, insbesondere seine ausgezeichneten anwendungstechnischen Qualitäten (Salz-, pH-Stabilität; drucktechnische Eigenschaften) verschlechtern. Ebenso kann es von Vorteil sein, die nach der Sulfoethylierung vorliegenden Mengen an Alkali mit alkaliverbrauchenden Reagenzien, wie z.B. Alkylhalogeniden, zu neutralisieren. Der Substitutionsgrad durch alkaliverbrauchende Reagenzien (z.B. Methylchlorid) liegt bei DS <0,5. Werden Reagenzien eingesetzt, die bereits mit katalytischen Mengen Alkali reagieren, liegt der molekulare Substitutionsgrad (MS) bei maximal 0,7.

Es wurde gefunden, daß eine nach den Punkten 1 bis 3 hergestellte Sulfoethylcellulose im Textildruck mit Reaktivfarbstoffen zu keiner erkennbaren Griffverhärtung des Substrates führt. Ein solches Produkt ist als Alternative zu Alginatverdickungsmitteln einsetzbar. Der Vorteil der so hergestellten SEC ist in einem minimalen Reagenzaufwand zu sehen, einem hohen Aktivgehalt durch eine sich gegebenenfalls nach der ersten Stufe anschließende Reinigung und eine damit verbundene hohe Viskositätsergiebigkeit. Die SEC ist stabil gegenüber mikrobiellem Abbau, weist eine ausgezeichnete Elektrolytstabilität auf und ist als gereinigtes oder teilgereinigtes, insbesondere jedoch technisches Produkt einsetzbar.

Ein wichtiges Qualitätskriterium des nach dem erfindungsgemäßen Verfahren hergestellten Sulfoethylcellulosederivates, ist die vollständige Wasserlöslichkeit der erhaltenen Produkte, die bei >99,9 % liegt bzw. der hohe Transmissionswert ihrer wäßrigen Lösungen von >96 %.

US-A-2 132 181 beschreibt ein Verfahren von im Kneter hergestellten Sulfoethylcellulosen, die jedoch alle - verfahrensbedingt - hohe Anteile an Fasern und Gelkörpern aufweisen.

US-A-2 580 352 beschreibt die Herstellung von Cellulosesulfoethylethern durch Umsetzung einer alkalischen Polysaccharidsuspension in einem inerten organischen Lösungsmittel. Die in den Beispielen erwähnten Angaben zur Herstellung der Sulfoethylcellulose zeigen jedoch, daß nach dem Verfahren lediglich Substitutionsgrade von maximal ca. 1,0 einstellbar sind.

T. Timell (Svensk Papperstidning 51, Nr. 11, 254 [1948]) beschreibt die Herstellung von Sulfoethylcellulosen mit Substitutionsgraden durch Sulfoethylgruppen von maximal 0,42. Wie bereits oben beschrieben, sind Produkte mit derart niedrigen Substitutionsgraden für den Einsatz als Verdickungsmittel im Reaktivdruck ungeeignet da es über nicht veretherte Hydroxygruppen der Cellulose zu Reaktionen mit den Reaktivfarbstoffen kommt. Schlechtere Druckqualitäten und Griffverhärtungen des Textilgewebes sind bei derart niedrigen Substitutionsgraden die Folge.

Bei den in DE-OS 3 147 434, DE-OS 3 306 621, DE-OS 3 316 124 und DE-OS 3 417 952 beschriebenen wasserlöslichen Celluloseethern wird u.a. die Umsetzung mit sulfonoalkylgruppenübertragenden Reagenzien beschrieben. Die in ihrer Viskosität, ihrem Substitutionsgrad, ihrer Ausbeute und ihrer Lösungsqualität nicht näher bezeichneten Produkte werden entweder in Dimethylether bzw. Dimethoxyethan allein oder im Gemisch mit Alkanolen, Alkandiolen und/oder Alkoxyalkanolen hergestellt.

E.A. Plisko et al (Zh. Prikl. Khim. 36, 1994 [1963] und Zh. Prikl. Khim. 50, 9, 2003 [1967]) beschreiben die Herstellung von SEC durch Reaktion von Alkalicellulose mit 2-chlorethansulfonsaurem Natriumsalz. Die im Slurry-Verfahren vorgenommenen Umsetzungen führen jedoch verfahrensbedingt nur zu extrem niedrigviskosen bzw. niedrigsubstituierten Produkten (maximaler Substitutionsgrad 0,42).

In SU-757 540 wird ein zweistufiges Verfahren zur Herstellung einer SEC beschrieben, in dem in der ersten Stufe durch Umsetzung von Cellulose mit wäßriger Natronlauge Alkalicellulose hergestellt, diese mittels eines Preßwerkzeuges abgepreßt und nachfolgend aufgelockert wird. In einer zweiten Stufe wird dann die abgepreßte Alkalicellulose in einem Slurry-Verfahren mit vinylsulfonsaurem Natrium mit Ausbeuten von ca. 9 bis 43 % sulfoethyliert. Neben der separat durchgeführten Alkalisierung und den beispielhaft erwähnten niedrigen Substitutionsgraden (DS-Sulfoethyl = 0,55), ist vor allem der verfahrensbedingte unvermeidbare alkalischoxidative Abbau der Cellulose, der lediglich zu niedrigviskosen Veretherungsprodukten führt, von Nachteil.

JP-8 218 701 beschreibt die Herstellung von SEC durch Umsetzung von Alkalicellulose mit 2-chlorethansulfonsaurem Natriumsalz unter stufenweiser Zugabe zu einem inerten Slurrymedium. Die Produkte sind jedoch aufgrund ihres zu geringen Substitutionsgrades (DS ca. 0,3) nicht im Reaktivdruck einsetzbar.

In dem nachfolgend aufgeführten Beispiel wird die Verwendung eben solcher Produkte als Verdickungsmittel im Reaktivdruck, näher beschrieben.

Die in den Beispielen angegebenen Viskositäten werden mit einem Rotationsviskosimeter (Haake) Typ RV 100, System M 500, Meßeinrichtung MV nach DIN 53 019, bei einer Schergeschwindigkeit von D = 2,5 s⁻¹ (T = 20°C) bestimmt.

Die erfindungsgemäß eingesetzten Celluloseether besitzen Viskositäten von 10 bis 50 000 mPa.s (Rotationsviskosimeter, gemessen als 2-gew.-%ige, wäßrige Lösung der gereinigten Substanz bei einem Schergefälle D = 2,5 s⁻¹, bei 20°C).

Die Ermittlung des Carboxymethylsubstitutionsgrades erfolgt nach ASTM-D 1439-83 a/Methode B. Der Sulfoethylsubstitutionsgrad wird durch Titration mit Bariumperchlorat gegen Thorin nach Ehrenberger/Gorbach (Methoden der Organischen Elementar- und Spurenanalyse, Verlag Chemie, Weinheim, 1973, S. 223) bestimmt. Der Aufschluß hierfür erfolgt nach der Methode von Schöninger (Heraeus-Druckschrift EW-F 1.6.1 [Methode 1]).

Die Transmissionen der in den Beispielen angegebenen Sulfoethyl- bzw. Carboxymethylcellulosen liegen alle bei >96 % (Hitachi-Spektralphotometer Modell 101, Hitachi Ltd., Tokio/Japan). Die Bestimmung erfolgt an 2-gew.-%igen, wäßrigen Lösungen in einer Glasküvette mit 10 mm optischer Weglänge (λ = 550 nm). Der wasserlösliche Anteil der beispielhaft erwähnten und erfindungsgemäß eingesetzten Produkte liegt bei ≥99,9 %.

Die Sulfoethylcellulosen werden als Druckpasten-Grundlagen im Textildruck eingesetzt. Sie werden dabei vorzugsweise allein, können aber auch im Gemisch mit anderen, im Textildruck üblichen, natürlichen oder halbsynthetischen Druckpasten-Grundlagen, wie z.B. Natriumalginat, Stärke, modifizierten Stärken, Guar, Johannisbrotkernmehl, Gummiarabicum, Kristallgummi, Traganth-Gummi, Tamarinde und/oder Celluloseethern, insbesondere Carboxymethylcelluloseethern bekannter Gütequalität oder vollsynthetischen Verdickungsmitteln, wie z.B. Polymerisatverdickern eingesetzt werden, wobei die Menge der beanspruchten Sulfoethylcellulose im Gemisch nicht unter 10 Gew.-% liegen sollte, da sonst der erfindungsgemäße Vorteil (Salz-, pH-Stabilität-, Druckqualität u.a.) nicht zum Tragen kommt.

Als Textilmaterialien können synthetische Fasern, Naturfasern, Mischgewebe oder Celluloseregenerat verwendet werden.

Als Farbstoffe werden Reaktivfarbstoffe verwendet.

Der Gegenstand der Erfindung soll anhand der folgenden Beispiele näher erläutert werden (Teile oder %-Angaben sind Gew.-Teile bzw. Gew.-%).

### Beispiel 1

135 Teile eines feingemahlenen, gebleichten, veredelten Linterszellstoffes (Trockengehalt: 94,7 %) werden in einem thermostatisierbaren Reaktor mit geeignetem Rührer unter Stickstoffatmosphäre in 2.181 Teilen Isopropanol, 287 Teilen einer 42,6 %igen, wäßrigen Lösung von Vinylsulfonsäurenatriumsalz und 54,7 Teilen Wasser dispergiert und 15 min lang gerührt. Danach werden 75,5 Teile Natriumhydroxid-Plätzchen hinzugegeben und 80 min lang bei 25 bis 30°C alkalisiert. In 30 min wird auf 75°C erwärmt und die Reaktionstemperatur von 75°C 180 min lang gehalten. Der Ansatz wird durch Zugabe einer äquimolaren Menge konzentrierter Essigsäure neutralisiert und das Produkt abfiltriert. Die Sulfoethylcellulose wird mit 70 %igem, wäßrigem Methanol gewaschen, an der Luft getrocknet und anschließend gemahlen (Sieblinie [mm]: 100 % <0,315, 95 % <0,25, 40 % <0,063). Das Produkt besitzt einen Substitutionsgrad durch Sulfoethylgruppen von 0,59 und eine Viskosität von 24 530 mPa.s.

226 g der so hergestellten, gemahlenen Sulfoethylcellulose (Trockengehalt: 87,5 %) werden sodann für einen weiteren Veretherungsschritt in 2.181 Teilen Isopropanol, 25 Teilen NaOH-Plätzchen eingegeben und mit 285 Teilen einer 42,7 %igen, wäßrigen Vinylsulfonsäurenatriumsalzlösung dispergiert und 15 min lang gerührt. Nach Eingabe von 25 Teilen Natriumhydroxid-Plätzchen wird 30 min bei 25 bis 30°C alkalisiert und in 30 min auf 75°C erwärmt. Nach 180 min werden nochmals 154 Teile einer 50 %igen Vinylsulfonsäurenatriumsalzlösung hinzugetropft und nochmals 180 min bei 75°C verethert. Anschließend wird durch Zugabe einer äquimolaren Menge konz. Essigsäure neutralisiert und das Produkt aufgearbeitet. Nach Reinigung mit 70 %igem Methanol wird das Produkt an der Luft getrocknet. Der Substitutionsgrad durch Sulfoethylgruppen liegt bei 1,52. Die Viskosität beträgt 4.490 mPa.s.

### Beispiel 2 (Vergleichsbeispiel CMC1)

127 Teile eines feingemahlenen, gebleichten, veredelten Linterzellstoffes werden in einem thermostatisierbaren Reaktor mit geeignetem Rührer unter Stickstoffatmosphäre in 2.193 Teilen Isopropanol dispergiert. Nach Zugabe von 88 Teilen Natriumhydroxid-Plätzchen in 210 Teilen Wasser wird 80min lang bei 25 bis 30°C alkalisiert. 130 Teile einer 80 %igen, wäßrigen Lösung von Monochloressigsäure werden hinzugegeben. In 30min wird auf 70°C erwärmt und diese Temperatur 120 min lang gehalten. In der Hitze werden sodann nochmals 88 Teile Natriumhydroxid-Plätzchen und nachfolgend kontinuierlich über einen Zeitraum von 20 min 130 Teile einer 80 %igen, wäßrigen Monochloressigsäure hinzugegeben. Die Veretherung wird anschließend bei 70°C während weiterer 120 min vorgenommen. Das Produkt wird separiert und durch Waschen mit 70 %igem Methanol von Reaktionsnebenprodukten befreit. Die CMC wird bei Raumtemperatur getrocknet und gemahlen. Der Substitutionsgrad durch Carboxymethylgruppen liegt bei 1,73. Die Viskosität des gereinigten Produktes beträgt 19.000 mPa.s.

### Beispiel 3 (Vergleichsbeispiel CMC 2)

50 kg eines käuflich erhältlichen CMC-Pulvers (Walocel® CRT 30000 P [Sieblinie (mm): 100 % <0,315, 95 % <0,25, 40 % <0,063] [Trockengehalt: 92 %]) werden in einem thermostatisierbaren Reaktor unter Stickstoffatmosphäre in 465 l Isopropanol und 12,91 Wasser suspendiert. Nach Zugabe von 44,3 kg einer 49,9 %igen Natronlauge wird 80 min lang bei 30 bis 32°C alkalisiert. Anschließend werden innerhalb von 10 min 32 kg einer 80 %igen, wäßrigen Lösung von Monochloressigsäure hinzugegeben. Innerhalb von 15 min wird auf 75°C erwärmt und diese Temperatur 120 min lang gehalten. In 45 min wird auf 30°C abgekühlt und über eine Zentrifuge abgetrennt. Die CMC wird mit 80%igem Methanol salzfrei gewaschen und anschließend bei 70°C getrocknet. Der Substitutionsgrad durch Carboxymethylgruppen liegt bei 1,56. Die Viskosität der 2gew-.%igen Lösung beträgt 45.300 mPa.s.

Das nach der ersten und gegebenenfalls nach der zweiten Stufe vorzunehmende Zerkleinerungsverfahren wird als Trocken- oder als Naßvermahlung durchgeführt. Als Mühlentypen können Walzen-, Kugel-, Schlag- und Schleuder-, Strahl- oder Schwingmühlen o.a. verwendet werden. Um die Auflösbarkeit des Verdickungsmittels beim Bedrucken des Textilmaterials zu verbessern, empfiehlt es sich, die Produkte vor ihrem Einsatz zu mahlen und auf eine Sieblinie von 100 % ≤2,0 mm einzustellen.

In den nachfolgend aufgeführten Beispielen ist die Wirkung einer erfindungsgemäß beanspruchten Sulfoethylcellulose als Verdickungsmittel im Textildruck einem handelsüblichen Natriumalginat (Lamitex M 5, Fa. Protan / Norwegen) und hochsubstituierten Carboxymethylcellulosen gegenübergestellt. Verglichen wurde Natriumalginat als 6 %ige Lösung mit den o.g. Produkten, deren Viskositäten isoviskos auf ca. 30.000 mPa.s eingestellt wurden [Brookfield RVS, Spindel 4, 20 Upm].

Die Zusammensetzung der mit den Verdickungsmitteln hergestellten Stammverdickungen ist in Tabelle 1 aufgeführt.

Die Druckpasten erhält man durch Abmischung definierter Mengen der jeweiligen Stammverdickung (90 Teile) mit definierten Teilen des Farbstoffes (10 Teile). und dest. Wasser. Als Farbstoff wird ein handelsüblicher Reaktivfarbstoff (Cibacron Türkis PG 3® [40 %] verwendet.

**Tabelle 1 :**

| **Zusammensetzung der Stammverdickungen** | | | | | |
|---|---|---|---|---|---|
| Verdickungsbestandteile | Stammverdickungen¹⁾ | | | | |
| | A | B | C | D | E |
| Lamitex M 5²⁾ | 550 | - | - | 275 | - |
| SEC | - | 700 | - | - | - |
| CMC (Vergleich 1) | - | - | 700 | 350 | - |
| CMC (Vergleich 2) | - | - | - | - | 500 |
| Lyoprint AP® ³⁾ | 3 | 3 | 3 | 3 | 3 |
| Lyoprint RG ® ⁴⁾ | 10 | 10 | 10 | 10 | 10 |
| Harnstoff | 100 | 100 | 100 | 100 | 100 |
| Na₂CO₃-Lsg. (1:4) | 75 | 75 | 75 | 75 | 75 |
| Permutit-Wasser | 262 | 112 | 112 | 187 | 312 |
| Gesamtmenge | 1.000 g | | | | |

| | | | | | |
|---|---|---|---|---|---|
| ¹⁾ Angaben in Gewichtsteilen | | | | | |
| ²⁾ Lamitex M 5 enthält 5 g/kg Natriumhexametaphosphat (Calgon T) und 5 g/kg Formalin (37 %ig | | | | | |
| ³⁾ Entschäumer; Fa. BASF/Ludwigshafen | | | | | |
| ⁴⁾ Oxidationsmittel; Fa. BASF/Ludwigshafen | | | | | |

Mit den Fertigdruckpasten werden Druckversuche mit Cotton-Schussatin (mercerisiert, gebleicht) als Substrat durchgeführt. Das Textilgut wird ca. 10 min bei 102 bis 105°C getrocknet (Sattdampf-Fixierung [Mathis-Trockner]) und durch Trockenhitze (Heißluft) fixiert (1 min bei 200°C, Mathis-Trockner). Der Auswaschprozeß erfolgt in drei Stufen.
a) gründliches, kaltes Spülen,
b) Behandlung in der Nähe der Kochtemperatur (10 min),
c) kaltes Spülen.

Für die Beurteilung von Stärke, Penetration, Nuance, Griff und Egalität wird eine 64-T-Schablone (Rechtecke) und eine Rakel mit einem Durchmesser von 8 mm eingesetzt (Magnetstufe 3, Geschwindigkeitsstufe 3) (Zimmer-Flachfilmdruck). Für die Beurteilung der Standschärfe wird eine 68-T-Testschablone und eine Rakel mit einem Durchmesser von 8 mm verwendet (Magnetstufe 3, Geschwindigkeitsstufe 3). Die Ergebnisse der Druckvorgänge gehen aus Tabelle 2 hervor.

**Tabelle 2 :**

| **Druckausfall/Vergleich mit Lamitex M 5 (Nr. 1), Sattdampf-Fixierung** | | | | | | | |
|---|---|---|---|---|---|---|---|
| Druck bzw. Druckpaste | Stammverdickung | Stärke¹⁾ | Nuance¹⁾ | Penetration | Egalität | Griff | Standschärfe |
| 1 | A | 100 %²⁾ | ²⁾ | ²⁾ | ²⁾ | ²⁾ | ²⁾ |
| 2 | B | 110 % | praktisch gleich | etwas mehr | praktisch gleich | praktisch gleich | etwas -deutlich besser |
| 3 | C | praktisch gleich | praktisch gleich | deutlich mehr | praktisch gleich | etwas -deutlich schlechter | deutlich -erheblich besser |
| 4 | D | praktisch gleich | praktisch gleich | Spur -etwas mehr | praktisch gleich | etwas schlechter | etwas -deutlich besser |
| 5 | E | 112 % | praktisch gleich | deutlich mehr | praktisch gleich | deutlich schlechter | etwas besser |

| | | | | | | | |
|---|---|---|---|---|---|---|---|
| ¹⁾ = farbmetrische Messung | | | | | | | |
| ²⁾ = Vergleich | | | | | | | |

Die in den Tabellen verwendeten Fachausdrücke sind dem Cellulose- bzw. Textildruckfachmann bekannt und bedürfen keiner weiteren Erklärung. Verwiesen sei in diesem Zusammenhang auf die Kapitel "Textildruck" und "Textilfärberei" in Ullmanns Encyclopädie der Technischen Chemie, Band 22, Seite 565 ff und Seite 635 ff (Verlag Chemie, Weinheim, 1982).

Aus der nachfolgend aufgeführten Wertetabelle ist die Überlegenheit, der im Textildruck eingesetzten, erfindungsgemäß beanspruchten Sulfoethylcellulose klar erkennbar. Neben der literaturbekannten Elektrolyt- und pH-Stabilität (siehe z.B. US-PS 2 811 519, J-63 182-301 A und EP-0 319 865 A2) weisen die Produkte die unten angegebenen Vorteile auf.

**Tabelle 3 :**

| Exemplarischer Vergleich zwischen herkömmlichen, im Textildruck eingesetzten Verdickungsmitteln und dem erfindungsgemäß anzuwendenden Celluloseether | | | |
|---|---|---|---|
| Austestung hinsichtlich | Alginat | SEC | CMC |
| 1. Konservierung (Formaldehyd) | unbedingt erforderlich | nicht notwendig | nicht notwendig |
| 2. Scherstabilität | gut | gut | gut |
| 3. Egalität beim Druck | gut | gut | gut |
| 4. Standschärfe beim Druck | gut | sehr gut | sehr gut |
| 5. Griff des bedruckten Substrates | sehr gut | sehr gut | schlecht |
| 6. Penetration des Gewebes | gut | gut | gut |
| 7. Nuance | gut | gut | gut |
| 8. Reproduzierbarkeit | schlecht | gut | gut |

## Patentansprüche

1. Verwendung von Sulfoethylcellulose mit einem Sulfoethyl-Substitutionsgrad von 1,2 bis 2,0, erhältlich durch ein zwei- oder dreistufiges Veretherungsverfahren mit Mahlung und gegebenenfalls Reinigung zwischen den einzelnen Veretherungsstufen und wobei die Veretherung in der ersten Stufe nach einem Slurry-Verfahren vorgenommen wird, als Verdickungsmittel bzw. Rheologieverbesserer im Reaktiv-Textildruck.

2. Verwendung gemäß Anspruch 1, dadurch gekennzeichnet, daß die Sulfoethylcellulose im Gemisch mit Natriumalginat, Stärke, modifizierten Stärken, Guar, Johannisbrotkernmehl, Gummiarabicum, Kristallgummi, Traganth-Gummi, Tamarinde und/oder Celluloseethern, insbesondere Carboxymethylcelluloseethern oder synthetischen Verdickungsmitteln eingesetzt wird.

3. Verwendung gemäß einem der Ansprüche 1 oder 2, dadurch gekennzeichnet, daß als Textilmaterialien synthetische Fasern, Naturfasern, Mischgewebe oder Celluloseregenerat verwendet werden.

## Claims

1. The use of sulphoethyl cellulose with a degree of substitution by sulphoethyl of 1.2 to 2.0, obtainable by a two- or three-step etherification process with grinding and optionally with purification between the individual etherification steps and wherein the etherification in the first step is effected by a slurry method, as a thickening agent or rheology improver in reactive textile printing.

2. A use according to claim 1, characterised in that the sulphoethyl cellulose is used in admixture with sodium alginate, starch, modified starches, guar, carob seed grain, gum arabic, crystalline gum, gum tragacanth, tamarind and/or cellulose ethers, particularly carboxymethyl cellulose ethers, or synthetic thickening agents.

3. A use according to either one of claims 1 or 2, characterised in that synthetic fibres, natural fibres, blended fabrics or regenerated cellulose are used as textile materials.

## Revendications

1. Utilisation de sulfoéthylcellulose avec un degré de substitution sulfoéthyle de 1,2 à 2,0, qu'on peut obtenir par un procédé d'éthérification en deux ou trois étapes avec broyage et le cas échéant purification entre les étapes individuelles d'éthérification et où l'éthérification à la première étape est réalisée selon un procédé en pâte, comme épaississant ou améliorant de rhéologie en impression textile réactive.

2. Utilisation selon la revendication 1, caractérisée en ce qu'on utilise la sulfoéthylcellulose en mélange avec l'alginate de sodium, l'amidon, les amidons modifiés, la gomme guar, la farine de caroube, la gomme arabique, la gomme cristallisée, la gomme adragante, le tamarin et/ou des éthers de cellulose, notamment des éthers de carboxyméthylcellulose ou des épaississants synthétiques.

3. Utilisation selon l'une des revendications 1 ou 2, caractérisée en ce qu'on utilise comme matériaux textiles des fibres synthétiques, des fibres naturelles, des tissus mixtes ou de la cellulose régénérée.
